# EUROPÄISCHE PATENTSCHRIFT

(11) **EP 4 014 302 B1**
(45) Veröffentlichungstag und Bekanntmachung des Hinweises auf die Patenterteilung: **11.12.2024**
(21) Anmeldenummer: 20772280.2
(22) Anmeldetag: 15.09.2020
(51) Int. Cl.: H02K 3/32

(54) **STATOR MIT OPTIMIERTEM WICKELRAUM**
STATOR WITH OPTIMIZED WINDING SPACE
STATOR À ESPACE D'ENROULEMENT OPTIMISÉ

(30) Priorität: 10.10.2019 DE 102019127369
(43) Veröffentlichungstag der Anmeldung: 22.06.2022
(73) Patentinhaber: EBM-PAPST ST. GEORGEN GMBH & CO. KG, 78112 St. Georgen (DE)
(72) Erfinder: JESKE, Frank, 78112 St. Georgen (DE); WINTER, Björn, 79874 Breitnau (DE); JACOBS, Patrick, 78112 St. Georgen (DE); BESCH, Jürgen, 78083 Dauchingen (DE)
(74) Vertreter: Staeger & Sperling Partnerschaftsgesellschaft mbB
(86) Internationale Anmeldenummer: PCT/EP2020/075745
(87) Internationale Veröffentlichungsnummer: WO 2021/069182

(56) Entgegenhaltungen:
- WO-A1-2015/093157
- DE-A1- 102015 208 414
- JP-A- 2006 320 167
- JP-A- 2007 288 983
- JP-A- 2008 061 368
- US-B2- 10 044 240
- US-B2- 8 941 274

## Beschreibung

Die vorliegende Erfindung betrifft einen Stator mit Zähnen und einem im Bereich des Zahnkopfes optimiertem Wickelraum. Die Erfindung betrifft gleichermaßen geteilte und ungeteilte Statoren.

Unter Spulenwickeltechnik versteht man in der Elektroindustrie die Art und Methode des Aufwickelns des elektrischen Leiters (isolierter Draht oder Litze) zu einer Spule. Die Wicklungen von Statoren oder Rotoren von Motoren werden ebenfalls als Spulen bezeichnet. Die Wickeltechnik bestimmt wesentlich die Eigenschaften von wicklungsbehafteten, elektromechanischen Baugruppen. Dazu gehören die Isolationsfestigkeit, der Gütefaktor, die für eine bestimmte Leistung oder Magnetkraft erforderliche Größe oder auch das magnetische Streufeld. Weil die Anforderungen an die Energieeffizienz stark zunehmen, wachsen auch die Ansprüche an die Entwicklung von Bauteilen für elektromechanische Baugruppen wie z. B. bei Elektromotoren.

Elektrische Maschinen wie z. B. Elektromotoren und Generatoren sind üblicherweise aus einem Stator und einem Rotor aufgebaut. Bei Statoren wird der eisenhaltige Körper häufig aus Blech als Stanzteil im Vollschnittverfahren hergestellt, d. h. dass die Lamellen über den gesamten Umfang zusammenhängend sind. Hierbei ist typischerweise das Joch, die Zähne und die Zahnköpfe zusammenhängend - also ohne Trennstelle - aufgebaut. In axialer Richtung bestehen solche Statoren üblicherweise aus mehreren Lamellen, die häufig geklebt, verbacken oder mittels Stanznoppen stanzpacketiert sind.

Um ein Magnetfeld aufzubauen, wird um die jeweiligen Zähne eine Spule aus einem Wickeldraht gewickelt. Das abzugebende Drehmoment eines Motors steigt unter anderem mit dem Strom, der durch die Windungen fliest und der Anzahl der Windungen, die um die Zähne gewickelt sind. Insofern ist ein hoher Füllfaktor wünschenswert. Beim Bewickeln von Zähnen mit Zahnköpfen, muss zwischen den benachbarten Zahnköpfen ein Spalt freigehalten werden, damit das Wickelwerkzeug dazwischen passt, was für nadelgewickelte ungeteilte Statoren zutrifft. Alternativen dazu sind flyergewickelte und ggf. geteilte Statoren bekannt.

Um bei einem Motor das designbedingte Rastmoment und die Welligkeit zu reduzieren, besitzen die Zähne häufig sogenannte Zahnköpfe, wie zum Beispiel hammerförmige oder T-förmige Zahnköpfe.

Der zuvor genannte Füllfaktor ist die Summe des Querschnitts der eingelegten Kupferdrähte geteilt durch den Querschnitt zwischen den einzelnen Zähnen. Wenn für die elektrische Maschine nur ein sehr geringes Rastmoment und nur eine geringe Welligkeit zugelassen sind, sind aber häufig Zahnköpfe zwingend dazu notwendig. Dann kann - weil zwischen den Zahnköpfen ein gewisser Korridor freizuhalten ist - nur ein durchschnittlicher Kupferfüllfaktor erreicht werden.

Häufig benötigen elektrische Maschinen eine so hohe Leistungsdichte, die nur mit einem hohen Kupferfüllfaktor erreichbar ist.

In der DE 102 29 333 A1 und in DE 10022071 A1 sind beispielhafte Statorzähne und Zahnköpfe beschrieben. Die DE 10 2014 114929 A offenbart eine permanentmagneterregte Synchronmaschine in Zahnspulentechnik.

Aus der JP 2007 288983 ist ein Wickelzahn für einen Stator einer elektrischen Maschine bekannt, der einen T-förmigen Zahnkopf aufweist, der auf einem Zahnhals angeordnet ist, wobei entlang des Zahnhalses und einer jeweiligen Seitenfläche des jeweiligen Vorsprungs des Zahnkopfes eine Isolationsschicht vorgesehen ist.

Wünschenswert ist daher eine technisch einfache und effiziente Lösung zur Verbesserung des Füllfaktors bei einem mit Zahnköpfen ausgebildeten Zähnen eines Stators, insbesondere bei einem Stators bei dem die jeweiligen Zahnköpfe einstückig mit dem entsprechenden Zahn ausgebildet sind. Weiter ist aus der Schrift JP 2006 320167 A ein Wickelzahn mit Zahnkopf bekannt, bei welchen eine entlang des Zahnkopfes angeordnete Isolationslage Ausnehmungen für einen Wickeldraht vorsieht.

Der vorliegenden Erfindung liegt daher die Aufgabe zu Grunde, vorbesagte Nachteile im Stand der Technik zu überwinden und einen Stator mit Zahnköpfen aufweisenden Zähnen so weiter zu entwickeln, dass eine optimierte Wicklung erzielt wird.

Diese Aufgabe wird durch die Merkmalskombination gemäß Anspruch 1 gelöst.

Erfindungsgemäß ist hierzu die Isolation am Wickelzahn so auszugestalten, dass der Wickeldraht gezielt gestützt wird, um eine geordnete Wicklung zu ermöglichen. Vorzugsweise wird in der Isolationslage, die sich entlang dem Zahnkopf erstreckt, eine Kontur erzeugt, die dem Drahtdurchmesser und dem Wickelschema angepasst ist. Sie ist so ausgeführt, dass auf den Wickeldraht nach dem Bewicklungsprozess möglichst geringe Verschiebekräfte wirken, so dass der Draht nach dem Ablegen in seiner Zielposition verbleibt.

Erfindungsgemäß ist hierzu ein Wickelzahn eines Stators einer elektrischen Maschine mit einem an einem Zahnhals angeordneten Zahnkopf mit einer Zahnkopfstirnseite (am radial äußeren Ende) vorgesehen, wobei der Zahnkopf zur Reduktion der Motorwelligkeit zwei Auskragungen besitzt, die sich vom Zahnhals seitlich weg erstrecken, wobei je eine Isolationslage entlang dem Zahnhals und dem jeweiligen seitlichen Bereich der jeweiligen Auskragung vorgesehen ist und die jeweilige Isolationslage im Bereich des Zahnkopfes je eine Auskragung ausbildet, die sich seitlich vom Zahnkopf weg erstreckt. Diese Auskragungen der Isolationslage bilden dadurch Halteeinrichtungen zum Positionieren der Wickeldrähte im Bereich des Zahnkopfes aus. Somit gibt es die Möglichkeit die Nut zwischen zwei benachbarten Zähnen mit einem besseren Füllfaktor zu füllen.

In einer bevorzugten Ausgestaltung der Erfindung ist vorgesehen, dass sich die jeweilige Auskragung der jeweiligen Isolationslage im Wesentlichen in die gleiche seitliche Richtung erstreckt, wie die Erstreckungsrichtung der jeweiligen Auskragungen. Ebenfalls vorteilhaft ist es, wenn sich die jeweilige Auskragung jeweils am äußersten seitlichen Endabschnitt des Wickelzahns und zwar unmittelbar benachbart zur jeweiligen Ecke des Wickelzahns befindet, die am Übergang von der jeweiligen Seitenfläche an den Auskragungen zur Zahnkopfstirnseite ausbildet ist. Somit kann eine maximale Raumausnutzung für die Bewicklung erzielt werden.

Eine weitere bevorzugte Maßnahme, dass der Wickeldraht nach dem Ablegen durch das Wickelwerkzeug in seiner Zielposition verbleibt, ist es den Anlagewinkel α des Wickeldrahtes an der Isolationslage geringer als 45° zu gestalten. Alternativ oder ergänzend kann auch eine Rillenstruktur in die Isolationslage eingebracht werden, die dem Drahtdurchmesser des Wickeldrahtes angepasst ist. Somit ist es weiter vorteilhaft, wenn die Isolationslage zumindest im Bereich der jeweiligen Auskragungen des Zahnkopfes eine solche gewellte oder gerillte Oberflächenstruktur zum Lagepositionieren eines Wickeldrahts aufweist, um dadurch eine geordnete Wicklung zu ermöglichen.

Dies kann zum Beispiel dadurch bewerkstelligt werden, dass sich die von der Fußpunktmitte des Wickelzahns an die Anlagefläche der Isolationslage im Bereich der jeweiligen Auskragungen verlaufende Tangente unter einem Winkel α orientiert zur mittigen Wickelzahnachse verläuft, wobei α < 45° ist. Allerdings ist der Schnittpunkt in der "Fußpunktmitte" nicht fix. Wichtiger ist der gewählte Winkel zwischen den beiden Linien.

Ein weiterer Aspekt der vorliegenden Erfindung betrifft einen Stator mit einem Statorzentrum, an dem eine Mehrzahl sich radial nach außen weg erstreckende, wie zuvor beschriebene Wicklezähne ausgebildet sind, wobei wenigstens einer vorzugsweise jedoch alle Wickelzähne sowohl im Bereich des Zahnhalses als auch im Bereich des Zahnkopfs mit einem Wickeldraht mit einem Wickeldrahtdurchmesser D_{W} umwickelt ist.

In einer bevorzugten Ausgestaltung der Erfindung ist dabei vorgesehen, dass in Umfangsrichtung betrachtet zwischen je zwei unmittelbar benachbarten Wickelzähnen ein Nutzschlitz vorhanden ist und für die Breite des Nutzschlitzes folgende Bedingung gilt: B_{N} ≥ 2,5 ▪ D_{W}, wobei D_{W} wie zuvor angegeben der Wickeldrahtdurchmesser des Wickeldrahtes des bewickelten Stators ist.

Ebenfalls von Vorteil ist es, wenn für die Höhe des Zahnkopfes H_{ZK} im Bereich der Auskragungen im Verhältnis zur Höhe des Wickelzahns H_{WZ} folgendes Verhältnis gilt: H_{ZK} ≥ 0,1 ▪ H_{Z}. Selbstreden ist dabei, dass der Zahnkopf natürlich nie mehr als ca. 20% der Höhe des Zahnes haben soll, so dass ein optimaler Bereich zwischen 10% und 20% liegt.

In einer weiteren vorteilhaften Ausführungsform der Erfindung ist vorgesehen, dass die Auskragung der jeweiligen Isolationslage eine Länge Lₐ aufweist, die mindestens 30% weiter vorteilhaft mindestens 50% des Wickeldrahtdurchmessers D_{W} des Wickeldrahtes entspricht.

Weiter Vorteilhaft ist es, wenn der Füllfaktor um etwa 18% - 25% größer ist im Vergleich zu einem identisch ausgebildeten Stator mit Wickelzähnen gleicher Anordnung und Geometrie, jedoch ohne das Vorhandensein einer Isolationslage im Bereich des Zahnkopfes.

Ein noch weiterer Aspekt der vorliegenden Erfindung betrifft einen Elektromotor aufweisend einen wie zuvor beschriebenen Stator.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigt:
- Fig. 1: eine Ansicht eines Teilbereichs eines Stators mit drei Zähnen und
- Fig. 2: eine weitere Darstellung eines Ausführungsbeispiels.

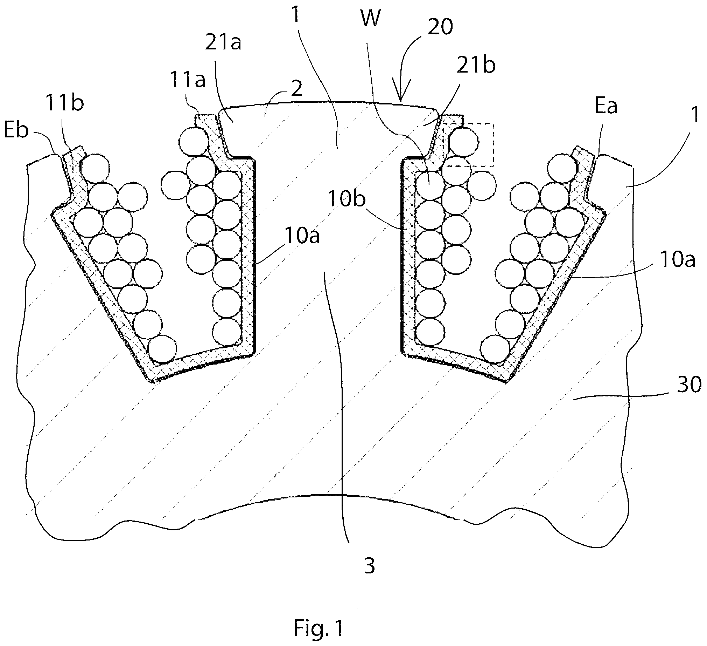

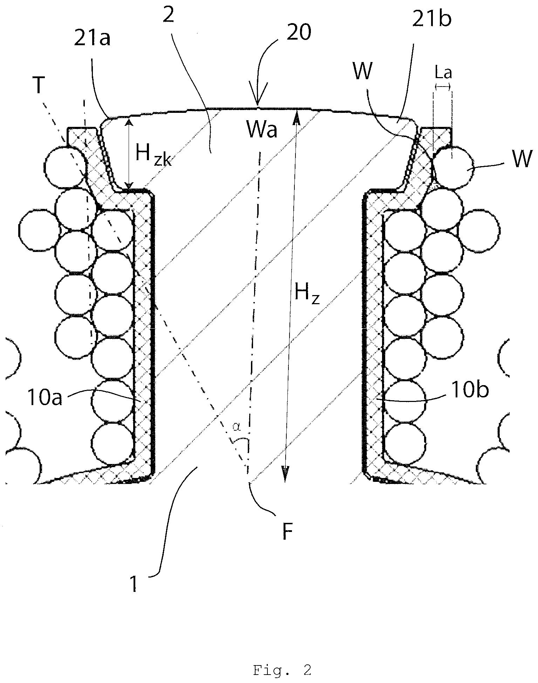

Im Folgenden wird die Erfindung anhand eines Ausführungsbeispiels mit Bezug auf die Figuren 1 und 2 näher beschrieben, wobei gleiche Bezugszeichen in den Figuren auf gleiche strukturelle und/oder funktionale Merkmale hinweisen.

In der Figur 1 findet sich eine Ansicht eines Teilbereichs eines Stators 30 mit drei Wickelzähnen 1, wobei die beiden äußeren Wickelzähne 1 nur zum Teil zu sehen sind. Jeder Wickelzahn 1 besitzt einen Zahnhals 3 an dessen Ende einstückig und einteilig ein Zahnkopf 2 ausgebildet ist.

Der Zahnkopf 2 ist als T-förmiger Zahnkopf ausgebildet und besitz an seinem radial äußeren Ende eine Zahnkopfstirnseite 20. Der Zahnkopf 2 besitz zwei Auskragungen 21a, 21b, die sich vom Zahnhals 3 seitlich weg in Richtung des jeweils benachbarten Zahnkopfes 2 des benachbarten Wickelzahns 1 erstrecken.

Ferner ist zu erkennen, dass die Nut zwischen zwei Wickelzähnen 1 mit einer Isolationslage 10a, 10b versehen ist, die jeweils an der Oberfläche der Wickelzähne 1 entlang dem Zahnhals 3 und dem jeweiligen seitlichen Bereich der jeweiligen Auskragungen 21a, 21b vorgesehen ist. Der Wickelzahn 1 besitzt im Bereich der Zahnkopfstirnseite 20 keine Isolationslage 10a, 10b. Wie ebenfalls in den Figuren 1 und 2 zu erkennen, bildet die jeweilige Isolationslage 10a, 10b, die jeweils im Bereich des Zahnkopfes 2 vorgesehen ist, je eine Auskragung 11a, 11b aus, die sich seitlich vom Zahnkopf 2 weg erstreckt und zwar ebenso in Richtung des jeweils benachbarten Zahnkopfes 2 des benachbarten Wickelzahns 1. Der so gebildete Vorsprung der Länge Lₐ bezogen auf die Oberseite der Isolationslage stellt eine Positioniereinrichtung für den Wickeldraht W dar. Die Positionierung zu geordneten Wicklung kann noch dadurch verbessert werden, dass die Isolationslage 10a, 10b zumindest im Bereich des Zahnkopfes 2 eine wellenförmige Ausnehmung 14 aufweist, in die der Wickeldraht eintauchen kann und sich dadurch in einer fest definierten Position am Wickelzahn 1 befindet. Ebenfalls ist erkennbar in den beiden Figuren 1 und 2, dass sich die jeweilige Auskragung 11a, 11b jeweils am äußersten seitlichen Endabschnitt des Wickelzahns 1 und zwar unmittelbar benachbart zur jeweiligen Ecke Ea, Eb des Wickelzahns 1 befindet, wobei die Ecken Ea, Eb den Übergang von der jeweiligen Seitenfläche an den Auskragungen 21a, 21b zur Zahnkopfstirnseite 20 definieren.

Der Nutzschlitz 31 zwischen je zwei unmittelbar benachbarten Wickelzähnen 1 besitzt die Breite B_{N} = 4,5 ▪ D_{W}. Für die Höhe des Zahnkopfes H_{ZK} im Bereich der Auskragungen 21a, 21b im Verhältnis zur Höhe des Wickelzahns H_{z} gilt bei diesem Ausführungsbeispiel: H_{ZK} = 0,15 ▪ H_{Z}.

In der Figur 2 ist die Orientierung der Anlagefläche A zur besseren Erläuterung dargestellt. Es ist eine Tangente an die Anlagefläche A der Isolationslage 10b gezeigt. Die Tangente T verläuft unter einem Winkel von 30° orientiert zur Radialrichtung der Wickelzahnachse Wa.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht, solange sie in den durch den unabhängigen Anspruch definierten Schutzbereich der Erfindung fallen.

## Patentansprüche

1. Wickelzahn (1) für einen Stator einer elektrischen Maschine mit einem an einem Zahnhals (3) angeordneten T-förmigen Zahnkopf (2) mit einer Zahnkopfstirnseite (20),
wobei der Zahnkopf (2) zur Reduktion der Motorwelligkeit zwei Auskragungen (21a, 21b) besitzt, die sich vom Zahnhals (3) seitlich weg erstrecken,
wobei je eine Isolationslage (10a, 10b) entlang dem Zahnhals (3) und einer jeweiligen Seitenfläche der jeweiligen Auskragung (21a, 21b) des Zahnkopfes (2) vorgesehen ist,
**dadurch gekennzeichnet, dass**
die jeweilige Isolationslage (10a, 10b) im Bereich der Auskragungen (21a, 21b) des Zahnkopfes (2) je eine Auskragung (11a, 11b) ausbildet, die sich seitlich vom Zahnkopf (2) weg erstreckt,
wobei die jeweilige Auskragung (11a, 11b) der Isolationslage (10a, 10b) jeweils am äußersten seitlichen Endabschnitt des Wickelzahns (1) und zwar unmittelbar benachbart zur jeweiligen Ecke (Ea, Eb) des Wickelzahns (1), die am Übergang von der jeweiligen Seitenfläche an den Auskragungen (21a, 21b) des Zahnkopfes (2) zur Zahnkopfstirnseite (20) liegt, ausgebildet ist und
wobei die Isolationslage (10a, 10b) zumindest an der jeweiligen Seitenfläche der jeweiligen Auskragungen (21a, 21b) des Zahnkopfes (2) eine gewellte oder gerillte Oberflächenstruktur zum Lagepositionieren eines Wickeldrahts (W) aufweist.

2. Wickelzahn (1) nach Anspruch 1, **dadurch gekennzeichnet, dass** sich die jeweilige Auskragung (11a, 11b) der jeweiligen Isolationslage (10a, 10b) im Wesentlichen in die gleiche Richtung erstreckt, wie die Erstreckungsrichtung der jeweiligen Auskragungen (21a, 21b) des Zahnkopfes (2).

3. Wickelzahn (1) nach einem der vorhergehenden Ansprüche, **dadurch gekennzeichnet, dass** die sich an die Anlagefläche (A) der Isolationslage (10a, 10b) im Bereich der jeweiligen Auskragungen (21a, 21b) des Zahnkopfes (2) verlaufende Tangente (T) unter einem Winkel α orientiert zur radial nach außen verlaufenden Wickelzahnachse (Wa) verläuft, wobei α < 45° ist.

4. Stator (30) mit einem Statorzentrum, an dem ein Wickelzahn (1) oder eine Mehrzahl sich radial nach außen weg erstreckende Wicklezähne (1) gemäß einem der Ansprüche 1 bis 3 ausgebildet sind, wobei wenigstens einer der Wickelzähne (1) sowohl im Bereich des Zahnhalses (3) als auch im Bereich des Zahnkopfs (2) mit einem Wickeldraht (W) mit einem Wickeldrahtdurchmesser D_{W} umwickelt ist.

5. Stator (30) nach Anspruch 4, **dadurch gekennzeichnet, dass**
in Umfangsrichtung betrachtet zwischen je zwei unmittelbar benachbarten Wickelzähnen (1) ein Nutzschlitz (31) vorhanden ist,
wobei die Breite des Nutzschlitzes (31) B_{N} ≥ 2,5 ▪ D_{W} beträgt

6. Stator (30) nach einem der vorhergehenden Ansprüche 4 oder 5, **dadurch gekennzeichnet, dass** für die Höhe des Zahnkopfes H_{ZK} im Bereich der Auskragungen (21a, 21b) des Zahnkopfes (2) im Verhältnis zur Höhe des Wickelzahns Hz folgendes gilt: H_{ZK} ≥ 0,1 ▪ H_{Z}.

7. Stator (30) nach einem der vorhergehenden Ansprüche 4 bis 6, **dadurch gekennzeichnet, dass** die Auskragung (11a, 11b) der jeweiligen Isolationslage (10a, 10b) eine Länge Lₐ aufweist, die mindestens 30% des Wickeldrahtdurchmessers D_{W} des Wickeldraht (W) entspricht.

8. Elektromotor aufweisend einen Stator (30) gemäß einem der Ansprüche 4 bis 7.

## Claims

1. Winding tooth (1) for a stator of an electrical machine having a T-shaped tooth head (2), arranged on a tooth neck (3), having a tooth head front side (20),
wherein the tooth head (2) has two projections (21a, 21b) for reducing the motor ripple, which extend laterally away from the tooth neck (3),
wherein an insulation layer (10a, 10b) is provided along the tooth neck (3) and a respective lateral surface of the respective projection (21a, 21b) of the tooth head (2), **characterized in that** the respective insulation layer (10a, 10b) forms a projection (11a, 11b) in the region of each of the projections (21a, 21b) of the tooth head (2), which extends laterally away from the tooth head (2),
wherein the respective projection (11a, 11b) of the insulation layer (10a, 10b) is formed at the outermost lateral end section of the winding tooth (1) and directly adjacent to the respective corner (Ea, Eb) of the winding tooth (1), which is located at the transition from the respective lateral surface on the projections (21a, 21b) of the tooth head (2) to the tooth head front side (20), and
wherein the insulation layer (10a, 10b) has a corrugated or grooved surface structure for positioning a winding wire (W) at least on the respective lateral surface of the respective projections (21a, 21b) of the tooth head (2).

2. Winding tooth (1) according to Claim 1, **characterized in that** the respective projection (11a, 11b) of the respective insulation layer (10a, 10b) extends substantially in the same direction as the extension direction of the respective projections (21a, 21b) of the tooth head (2).

3. Winding tooth (1) according to any one of the preceding claims, **characterized in that** the tangent (T) extending at the contact surface (A) of the insulation layer (10a, 10b) in the area of the respective projections (21a, 21b) of the tooth head (2) extends at an angle α oriented to the radially outwardly extending winding tooth axis (Wa), wherein α < 45°.

4. Stator (30) having a stator center on which a winding tooth (1) or a plurality of radially outwardly extending winding teeth (1) according to any one of Claims 1 to 3 are formed, wherein at least one of the winding teeth (1) is wound both in the area of the tooth neck (3) and in the area of the tooth head (2) using a winding wire (W) having a winding wire diameter D_{w}.

5. Stator (30) according to Claim 4, **characterized in that**,
viewed in the circumferential direction, there is a useful slot (31) between each two directly adjacent winding teeth (1),
wherein the width of the useful slot (31) is B_{N} ≥ 2.5 · D_{w}.

6. Stator (30) according to either one of preceding Claims 4 or 5, **characterized in that** the following applies to the height of the tooth head H_{ZK} in the area of the projections (21a, 21b) of the tooth head (2) in relation to the height of the winding tooth Hz : H_{ZK} ≥ 0.1 · Hz.

7. Stator (30) according to any one of preceding Claims 4 to 6, **characterized in that** the projection (11a, 11b) of the respective insulation layer (10a, 10b) has a length Lₐ which corresponds to at least 30% of the winding wire diameter D_{w} of the winding wire (W).

8. Electric motor comprising a stator (30) according to any one of Claims 4 to 7.

## Revendications

1. Dent d'enroulement (1) pour un stator d'une machine électrique avec une tête de dent (2) en forme de T disposée sur un col de dent (3) avec une face frontale de tête de dent (20),
dans lequel la tête de dent (2) présente deux saillies (21a, 21b) pour la réduction de l'ondulation du moteur, qui s'étendent latéralement en s'éloignant du col de dent (3),
dans lequel, à chaque fois, une couche d'isolation (10a, 10b) est prévue le long du col de dent (3) et d'une surface latérale respective de la saillie respective (21a, 21b) de la tête de dent (2), **caractérisée en ce que** la couche d'isolation respective (10a, 10b) dans la zone des saillies (21a, 21b) de la tête de dent (2) forme, à chaque fois, une saillie (11a, 11b) qui s'étend latéralement à l'opposé de la tête de dent (2),
dans lequel la saillie respective (11a, 11b) de la couche d'isolation (10a, 10b) est formée respectivement à la section d'extrémité latérale la plus externe de la dent d'enroulement (1), en particulier directement de façon adjacente au coin respectif (Ea, Eb) de la dent d'enroulement (1), qui se trouve à la transition entre la surface latérale respective et les saillies (21a, 21b) de la tête de dent (2) jusqu'à la face frontale de tête de dent (20), et
dans lequel la couche d'isolation (10a, 10b) présente une structure de surface ondulée ou rainurée pour le positionnement d'un fil d'enroulement (W) au moins sur la surface latérale respective des saillies respectives (21a, 21b) de la tête de dent (2).

2. Dent d'enroulement (1) selon la revendication 1, **caractérisée en ce que** la saillie respective (11a, 11b) de la couche d'isolation respective (10a, 10b) s'étend essentiellement dans la même direction que la direction d'extension des saillies respectives (21a, 21b) de la tête de dent (2).

3. Dent d'enroulement (1) selon l'une des revendications précédentes, **caractérisée en ce que** la tangente (T) s'étend jusqu'à la surface de contact (A) de la couche d'isolation (1Da, 10b) au niveau des saillies respectives (21a, 21b) de la tête de dent (2) s'étend selon un angle α orienté par rapport à l'axe de dent d'enroulement (Wa) s'étendant radialement vers l'extérieur, dans lequel α < 45 °.

4. Stator (30) avec un centre statorique sur lequel sont formées une dent d'enroulement (1) ou une pluralité de dents d'enroulement (1) s'étendant radialement vers l'extérieur selon l'une des revendications 1 à 3, dans lequel au moins l'une des dents d'enroulement (1), tant dans la zone du col de dent (3) que dans la zone de la tête de dent (2), est enveloppé d'un fil d'enroulement (W) avec un diamètre de fil d'enroulement D_{w}.

5. Stator (30) selon la revendication 4, **caractérisé en ce que** vu dans la direction circonférentielle, il existe une fente utile (31) entre deux dents d'enroulement (1) immédiatement adjacentes respectives,
dans lequel la largeur de la fente utile (31) est B_{N} ≥ 2,5 · D_{w}.

6. Stator (30) selon l'une des revendications précédentes 4 ou 5, **caractérisé en ce que** ce qui suit s'applique à la hauteur de la tête de dent H_{ZK} au niveau des saillies (21a, 21b) de la tête de dent (2) par rapport à la hauteur de la dent d'enroulement Hz : H_{ZK} ≥ 0,1 · H_{Z}.

7. Stator (30) selon l'une des revendications précédentes 4 à 6, **caractérisé en ce que** la saillie (11a, 11b) de la couche d'isolation respective (10a, 10b) présente une longueur Lₐ qui est d'au moins 30 % du diamètre de fil d'enroulement D_{w} du fil d'enroulement (W).

8. Moteur électrique présentant un stator (30) selon l'une des revendications 4 à 7.
